# FASCICULE DE BREVET EUROPEEN

(11) **EP 3 825 159 B1**
(45) Date de publication et mention de la délivrance du brevet: **15.12.2021**
(21) Numéro de dépôt: 20207914.1
(22) Date de dépôt: 16.11.2020
(51) Int. Cl.: B60J 5/14

(54) **RIDEAU ISOTHERME POUR CARROSSERIE FRIGORIFIQUE**
ISOTHERM-VORHANG FÜR KÜHLFAHRZEUGKAROSSERIE
INSULATED CURTAIN FOR REFRIGERATED VEHICLE BODY

(30) Priorité: 19.11.2019 FR 1912917
(43) Date de publication de la demande: 26.05.2021
(73) Titulaire: Lamberet, 01380 Saint-Cyr-sur-Menthon (FR)
(72) Inventeur: DUGAS, Frédéric, 01250 MONTAGNAT (FR); TUET, Gwénaël, 01000 BOURG EN BRESSE (FR)
(74) Mandataire: Germain Maureau

(56) Documents cités:
- EP-A1- 0 462 740
- US-A- 4 991 639
- US-A- 5 588 475

## Description

La présente invention concerne un rideau isotherme pour carrosserie frigorifique.

Une carrosserie frigorifique, qui peut être utilisée sur un camion porteur ou sur une semi-remorque, comprend une caisse formée par un plancher, des panneaux latéraux et avant, un pavillon ou toit et un ouvrant arrière. L'ouvrant peut lui-même être de deux types à savoir porte à un ou deux battants ou rideau isotherme coulissant, tel que divulgué par exemple dans le document US 4,991,639.

Les rideaux isothermes ont donc la fonction d'ouvrant de l'arrière d'une carrosserie.

Les rideaux isothermes sont plus particulièrement utilisés pour des véhicules s frigorifiques transportant des denrées alimentaires dont la conservation demande des conditions climatiques particulières.

Dans ce cas, ces rideaux sont également fabriqués pour protéger l'intérieur de la carrosserie contre les conditions environnementales comme le froid, la chaleur ou encore l'humidité et doivent répondre à des propriétés particulières d'isolation.

Cependant, les rideaux isothermes de l'art antérieur présentent de nombreux inconvénients.

En effet, les rideaux isothermes actuellement connus présentent un poids élevé par le matériau utilisé pour leur confection. De plus, cela limite les choix de la conformation spatiale du rideau lors de sa fabrication.

De plus, les rideaux de l'art antérieur présentent des zones où l'étanchéité n'est pas garantie, ce qui peut entraîner la perte des denrées alimentaires se situant à l'intérieur de la carrosserie.

Enfin, lors de l'ouverture d'un tel rideau, et lorsque celui-ci est mouillée, le liquide se déverse à l'intérieur de l'habitacle, ce qui pose un problème d'hygiène par rapport aux produits alimentaires compris à l'intérieur de la carrosserie.

La présente invention vise à remédier à au moins un de ces inconvénients précités en fournissant Rideau isotherme pour une carrosserie frigorifique délimitant un espace intérieur, comprenant un cadre dans lequel est guidé un tablier qui présente une face interne en regard de l'espace interne et une face externe opposée, ledit tablier comprenant une pluralité de panneaux adjacents comprenant sur leur face extérieure un système d'emboiture comprenant une nervure en V conçue pour venir s'engager dans une découpe de V du panneau adjacent et sur leur face intérieure une série d'embrèvements dans lesquels sont encastrés des charnières assurant la liaison entre deux panneaux.

Selon un mode de réalisation, la forme de V comprend une pointe de V dirigée vers un seuil de carrosserie.

Selon un mode de réalisation, les faces extérieure et intérieure du panneau comprennent un logement configuré pour intégrer un moyen de fixation de type rivet et configuré pour fixer un joint inter panneaux.

Selon un mode de réalisation, le joint inter panneaux disposé sur la face extérieure du panneau est en forme de V, la forme de V comprenant une pointe de V dirigée vers un seuil de carrosserie.

Selon un mode de réalisation, une extrémité du tablier configurée pour être en contact avec le seuil de carrosserie dans la position déployée du tablier comprend un joint de type double tube disposé le long d'un axe d'extension de ladite extrémité.

Selon un mode de réalisation, l'extrémité du tablier configurée pour être en contact avec le seuil de carrosserie dans la position déployée du tablier, comprend un pion faisant saillie transversalement à un axe d'extension du panneau configuré pour s'insérer dans le seuil au niveau d'une lumière disposée en regard du pion.

Selon un mode de réalisation, l'au moins une charnière est configurée pour relier chaque panneau à chacun des panneaux adjacents à lui-même par des vis et à des rails par un galet configurée pour s'insérer dans le rail correspondant.

Selon un mode de réalisation, le tablier est configuré pour être mobile entre une position d'ouverture dans laquelle le tablier est replié et une position de fermeture dans laquelle le tablier est déployé de manière à fermer le rideau par un actionneur, l'actionneur étant un vérin pneumatique sans tige ovoïde, le vérin comprenant une fourche configurée pour relier une face arrière de carrosserie au vérin.

Selon un mode de réalisation, l'actionneur comprend au moins un équilibreur, l'équilibreur comprenant une poulie configurée pour enrouler une courroie configurée pour relier l'extrémité du tablier configurée pour être en contact avec le seuil de carrosserie à l'équilibreur.

L'invention concerne également une carrosserie frigorifique comprenant un rideau isotherme selon l'invention.

L'invention sera décrite plus en détails à travers les différentes figures présentées ci-dessous, ce qui facilitera sa compréhension.
[Fig. 1] représente une vue partielle en perspective d'une carrosserie frigorifique.
[Fig. 2A] représente une vue partielle de dessus d'une carrosserie lorsque le rideau est replié.
[Fig. 2B] représente une vue partielle de l'intérieur de la carrosserie, lorsque le rideau est déployé.
[Fig. 3A] est une vue détaillée d'une charnière centrale du rideau.
[Fig. 3B] est une vue détaillée d'une charnière latérale du rideau.
[Fig. 3C] est une vue détaillée d'un élément de liaison des panneaux au cadre.
[Fig. 4] est une vue partielle en coupe du rideau isotherme en mouvement.
[Fig. 5A] représente une vue en perspective de la face extérieure d'un panneau.
[Fig. 5B] représente une vue en perspective de la face intérieure d'un panneau.
[Fig. 6] représente une vue partielle du dessous du panneau configuré pour être en contact avec un seuil, de carrosserie.
[Fig. 7A] est une vue partielle en perspective du seuil de remorque configuré pour recevoir le dessous du panneau.
[Fig. 7B] est une vue partielle en perspective du dessous du panneau configuré pour être en contact avec le seuil de remorque.
[Fig. 8] représente une vue partielle de côté du panneau configuré pour être en contact avec le seuil de remorque.
[Fig. 9] représente une vue de dessous de l'actionneur permettant le déplacement du tablier.
[Fig. 10] représente une vue de l'équilibreur conformément à l'invention.
[Fig. 11A] représente une vue de face du boîtier comprenant les commandes de fermeture et d'ouverture du tablier.
[Fig. 11B] représente une vue de face d'une deuxième commande de fermeture et d'ouverture du tablier.

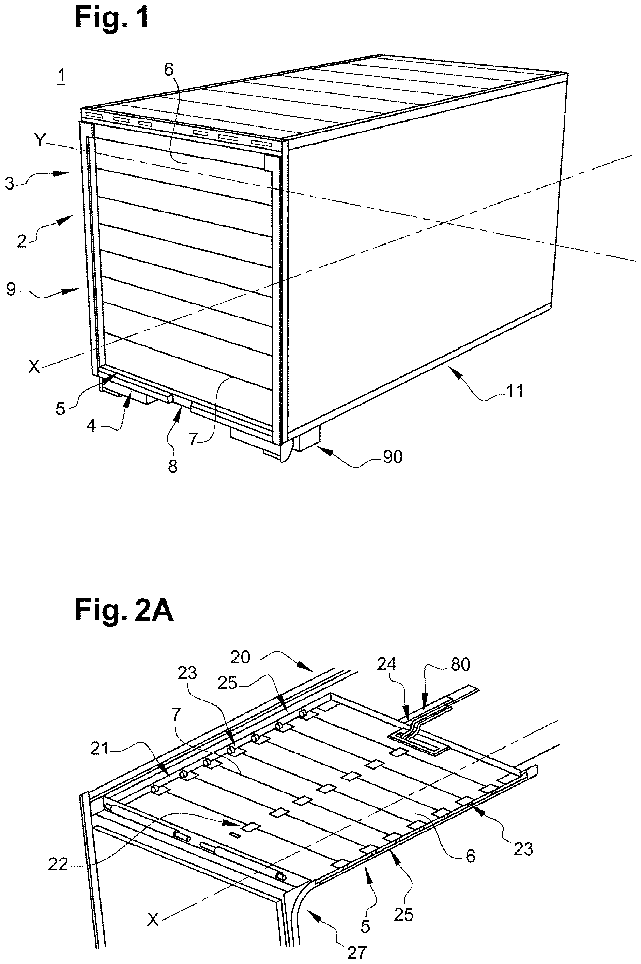

La figure 1 montre une carrosserie 1, pour véhicule frigorifique par exemple. La carrosserie 1 s'étend selon un axe longitudinal X et est équipée, sur une face arrière 2, d'un rideau isotherme 3 selon l'invention.

Le rideau isotherme 3 comprend un cadre 4 et un tablier 5 comprenant une pluralité de panneaux 6. Dans cet exemple de mode de réalisation de l'invention, le tablier 5 comprend huit panneaux 6.

Ces panneaux 6 s'étendent selon un axe d'extension Y transversal.

Entre chacun des panneaux 6, un joint d'étanchéité 7 inter panneaux 6 est inséré, empêchant ainsi l'infiltration de liquide, par exemple de l'eau, à l'intérieur de la carrosserie 1.

Le joint 7 inter panneaux 6 est en silicone, conférant ainsi une propriété 100% hydrophobe, évitant l'adhérence avec de la glace par exemple.

De plus, chaque joint 7 inter panneaux est de conformation spatiale en V, la pointe du V étant dirigée vers un seuil 8 de la carrosserie 1, d'un véhicule par exemple, permettant un écoulement du liquide, par exemple de l'eau, vers le centre du tablier 5, empêchant ainsi l'infiltration d'eau à travers la carrosserie 1.

Le cadre 4 est aussi équipé d'un joint d'étanchéité 9 sur l'ensemble du pourtour constituant le cadre 4.

Ce joint 9 peut également être en silicone.

La carrosserie 1 comprend également un boitier 90 permettant de contrôler la mobilité du tablier 5 entre une position de fermeture, c'est à dire déployée, comme représentée sur cette figure et une position repliée, comme représenté sur la figure 2A.

Le boîtier 90 peut être, comme représenté sur cet exemple de mode de réalisation, disposé au niveau d'une face latérale 11 de la carrosserie 1 et plus précisément sur une extrémité de la face latérale 11 la plus proche de la face arrière 2 de la carrosserie 1.

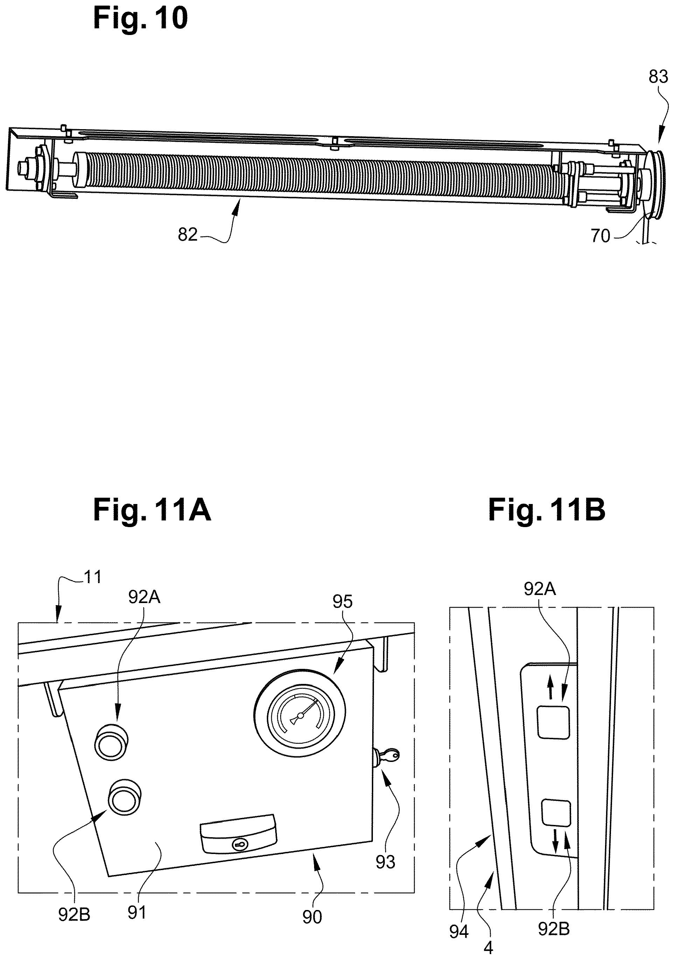

C'est le cas par exemple en référence à la figure 11A. Le boîtier 90 comprend, sur sa face externe 91, un manomètre 95 permettant une lecture directe de la pression pneumatique.

Des commandes d'ouvertures et de fermetures 92A et 92B, sous la forme de boutons, apparaissent également sur la face externe 91 du boîtier 90.

Une commande de verrouillage 93 permet également de verrouiller/déverrouiller les commandes d'ouvertures et de fermetures 92A et 92B par un système verrou/clé.

En référence à la figure 11B, une commande d'ouverture et de fermeture 92A et 92B peuvent également sur une face intérieure 94 du cadre 4.

Comme évoqué précédemment, la figure 2A montre le tablier 5 en position d'ouverture, c'est-à-dire replié.

En effet, le tablier 5 est disposé parallèlement à un toit 20 et selon l'axe longitudinal X d'extension de la carrosserie 1.

Le tablier 5 comprend, sur une face interne 21 tournée vers le toit 20 lorsque le tablier 5 est replié, et en opposition avec une face externe du tablier 5 comme représentée sur la figure 1, une multitude de charnières. Ces charnières sont réparties en charnières centrale 22 et en charnières latérales 23.

Sur sa face interne 21 et plus précisément au niveau d'une extrémité du tablier 5, celui-ci comprend également un actionneur 80, dans cet exemple de mode de réalisation de l'invention, l'actionneur 80 est un vérin 24, permettant le déplacement du tablier 5 de la position de fermeture à la position d'ouverture et/ou inversement.

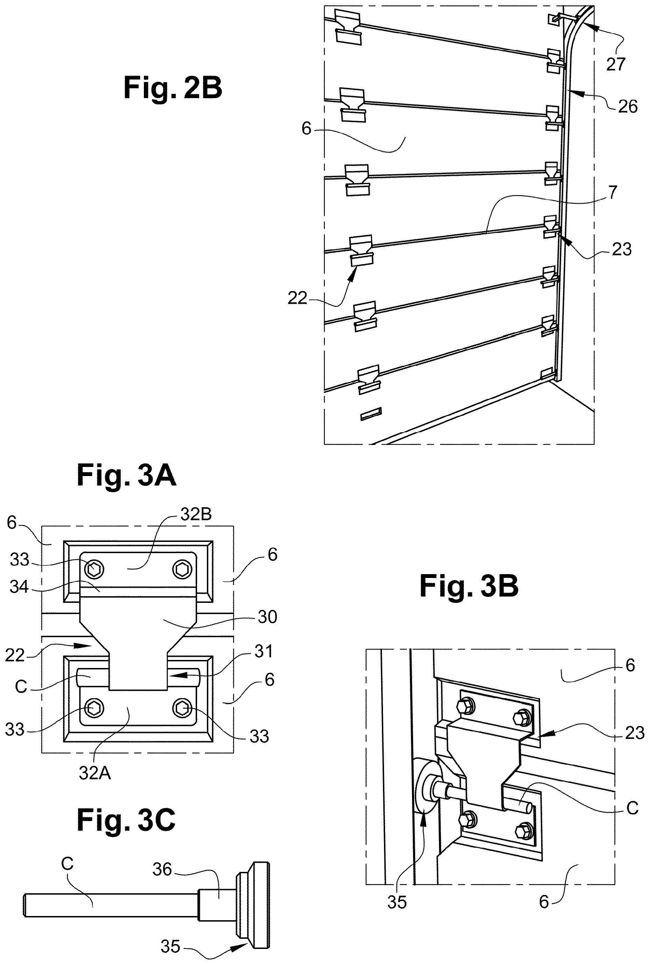

La figure 2B montre la face interne 21 du tablier 5, lorsque celui-ci est en position de fermeture.

Cette figure illustre bien le fait que la face interne 21 comprend, comme il est le cas également pour la face externe du tablier 5, entre chaque panneau 6, un joint inter panneaux 7 d'étanchéité, renforçant l'isolation de la carrosserie 1.

Sur cette figure 2B est également représentée les charnières centrales 22 reliant chaque panneau 6 avec le panneau 6 adjacent et disposé sensiblement au milieu selon l'axe d'extension Y du panneau 6, de chaque panneau 6.

Il est aussi représenté une partie des charnières latérales 23 disposées sur une extrémité de chaque panneau 6 et reliant à la fois et simultanément le panneau 6 avec le panneau 6 adjacent et des rails.

Encore plus précisément, les rails comprennent deux premiers rails 25, comme illustrés sur la figure 2A, disposés parallèlement par rapport à l'axe d'extension A de la carrosserie 1 et deux seconds rails 26 disposés transversalement par rapport à l'axe longitudinal X d'extension de la carrosserie 1, chaque premier rail 25 étant configuré pour être relié au second rail 26 correspondant par un troisième rail courbé 27.

La figure 3A montre une vue détaillée de la charnière centrale 22 reliant les panneaux 6 deux à deux.

Cette charnière centrale 22, dans cet exemple de réalisation, est en matériau inox monobloc roulé, d'une épaisseur de 2,5 mm.

En effet, la charnière centrale 22 comprend un corps central 30 disposé parallèlement et s'étendant perpendiculairement par rapport aux panneaux 6. Le corps central 30 comprend, sur une de ses extrémités, et plus particulièrement sur l'extrémité
31 la plus proche du seuil 8 de la carrosserie 1, un axe pivot C s'étendant selon l'axe d'extension Y du panneau 6, cet axe pivot C étant également lié à une plaque 32A fixée à un panneau 6 par des vis 33.

Sur l'autre extrémité du corps central 30, une extension 34 s'étend radialement vers le panneau 6 adjacent au panneau 6 précédent et lié à une plaque 32B fixée au panneau 6 adjacent au panneau 6 précédent par des vis 33.

Autrement dit, le corps central 30 est un pont inter panneaux 6.

La figure 3B montre une vue détaillée de la charnière latérale 23 reliant à la fois et simultanément deux panneaux 6 adjacents et les rails.

A la différence avec la charnière centrale 22 de la figure 3A, la charnière latérale 23 est disposé au niveau de l'extrémité du panneau 6.

De plus, l'axe pivot C s'étend jusqu'à s'insérer dans les rails par un galet 35, disposé sur l'une des extrémités de l'axe pivot C la plus proche des rails.

La figure 3C montre en détail l'axe pivot C comprenant le galet 35 de la charnière latérale 23.

L'axe pivot C de la charnière latérale 23 comprend sur l'extrémité la plus proche des rails, un embout 36 comprenant le galet 35, de forme arrondie et configuré pour être mobile selon un axe de rotation confondu avec l'axe pivot C.

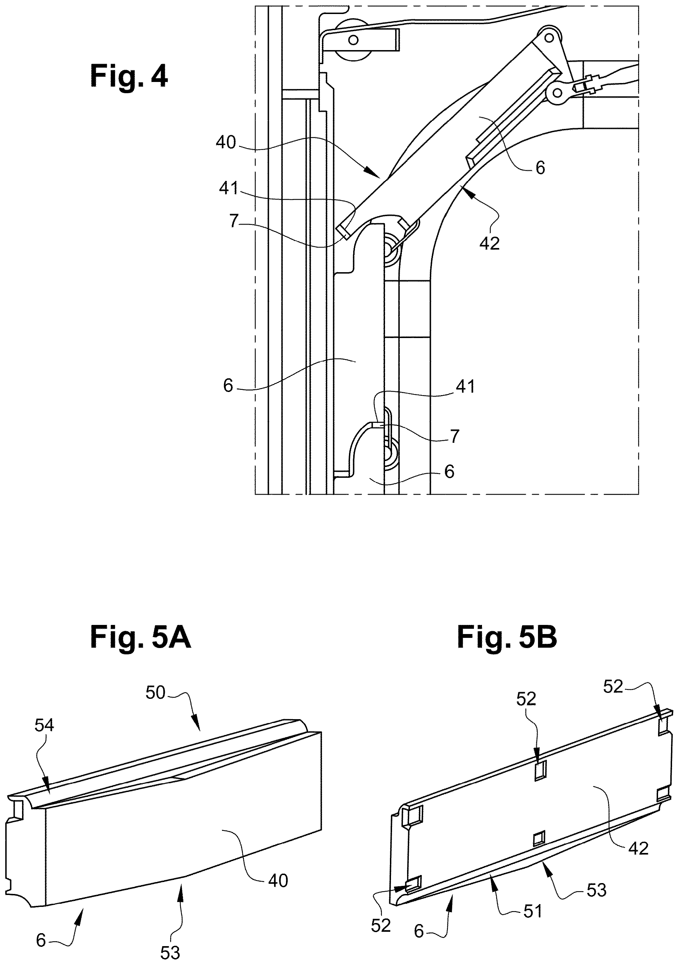

La figure 4 montre l'articulation des panneaux 6 entre eux lors du déplacement du tablier 5.

Chaque panneau 6 est emboîté avec le panneau 6 adjacent à lui-même par coopération de forme.

Sur la face extérieure 40 de chaque panneau 6 destiné à s'emboîter avec le panneau 6 adjacent à lui-même, un moyen de fixation 41 de type rivet est inséré afin d'y fixer un joint inter panneaux 7 d'étanchéité.

Il en est de même concernant la face intérieure 42 de chaque panneau 6.

Par face intérieure 42, on entend la face disposée vers l'intérieur de l'habitacle de la carrosserie 1 et par face extérieure 40, la face disposée dans le sens opposé à l'intérieur de l'habitacle de la carrosserie 1.

La figure 5A montre la face extérieure 40 du panneau 6.

La face extérieure 40 du panneau 6 comprend une découpe 50 Cette découpe 50 comprend un logement 54 de rivet extérieur configuré pour intégrer le moyen de fixation 41 de type rivet.

La forme de la découpe 50 est de conformation spatiale en V, la pointe du V étant dirigée vers le seuil 8 de la carrosserie 1, le joint inter panneau 7 d'étanchéité destiné à se fixer sur le moyen de fixation 41 de type rivet prenant également une forme en V.

L'ensemble du panneau 6 a également une forme en V, et plus particulièrement la face extérieure du panneau 6, par un système d'emboiture comprenant une nervure 53 en V, la pointe du V étant dirigée vers le seuil 8 de la carrosserie 1, permettant un écoulement de liquide vers le centre du tablier 5.

La nervure en V est conçue pour venir s'engager dans la découpe 50 de V du panneau 6 adjacent.

Cette conformation en V de chaque panneau 6 a aussi l'avantage d'empêcher l'écoulement du liquide, lorsque le tablier 5 est déplacé dans sa position repliée, à l'intérieur de l'habitacle de la carrosserie 1.

Ce panneau 6 peut être par exemple formé par moulage par injection basse pression de résine liquide (dit RTM pour Resin Transfert Molding en anglais) et peut par exemple présenter une épaisseur de 70 mm.

La figure 5B montre la face intérieure 42 du panneau 6.

La face intérieure 42 du panneau 6 comprend un logement de rivet intérieur 51 configuré pour intégrer le moyen de fixation 41 de type rivet, le joint inter panneau 7 d'étanchéité étant destiné à se fixer sur le moyen de fixation 41 de type rivet.

La face intérieure 42 comprend également une série d'embrèvements 52 situés sur chacune des extrémités des bords latéraux constituant le panneau 6 ainsi qu'au niveau du milieu du panneau 6.

Ces embrèvements 52 permettent d'encastrer les charnières latérales 23 concernant les embrèvements 52 situés sur les bords latéraux et les charnières centrales 22 concernant les embrèvements 52 situés au milieu du panneau 6.

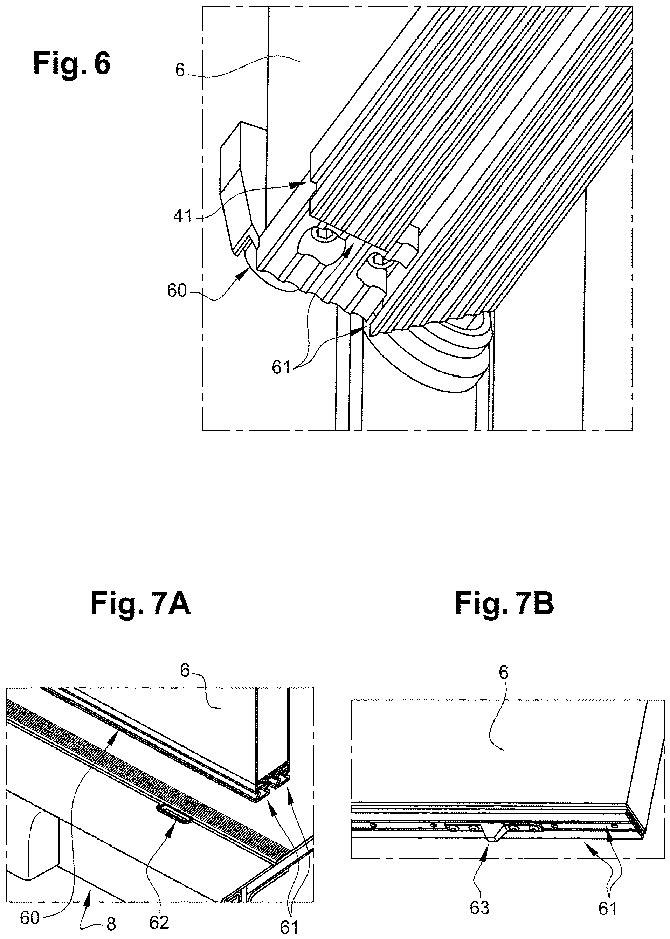

La figure 6 montre le dessous d'un panneau 6 et plus particulièrement le dessous 60 du panneau 6 destiné à être en contact avec le seuil 8 de la carrosserie 1 lorsque le tablier 5 est déployé.

Cette face du panneau 6 destiné à être en contact avec le seuil 8 de la carrosserie 1 lorsque le tablier 5 est déployé comprend un joint double chambre 61, en silicone, indépendant et déformable.

Ce type de joint double chambre 61 permet d'optimiser le contact entre le panneau 6 destiné à être en contact avec le seuil 8 de la carrosserie 1, évitant ainsi la déformation du tablier 5, tout en gardant sa fonction étanche.

Le joint double chambre 61 est également fixé au panneau 6 par des moyens de fixation 41 de type rivet, en matériau inox.

La figure 7A montre une vue partielle du panneau 6 destiné à être en contact avec le seuil 8 de la remorque 1 ainsi qu'une vue partielle du seuil 8 de carrosserie 1.

Le dessous 60 du panneau 6 destiné à être en contact avec le seuil 8 de la carrosserie 1 comprend les deux moyens de fixation 41 de type rivet s'étendant le long de l'axe d'extension Y du panneau 6.

Le seuil 8 comprend une lumière 62 configurée pour recevoir un pion 63, comme illustré sur la figure 7B, faisant saillie transversalement à l'axe d'extension Y du panneau 6 configuré pour être en contact avec le seuil 8 de carrosserie 1 et configurée pour s'insérer dans le seuil 8 au niveau de la lumière 62 disposée en regard du pion 63.

Sur la figure 7B, le joint double chambre 61 est fixé aux moyens de fixation 41 de type rivet.

Le pion 63, en matière inox par exemple, est fixé entre les deux moyens de fixation 41 de type rivet par des vis, en inox par exemple.

L'insertion du pion 63 dans la lumière 62 empêche la déformation du panneau 6 destiné à venir en contact du seuil 8 de carrosserie 1, en cas de choc externe ou interne du panneau 6.

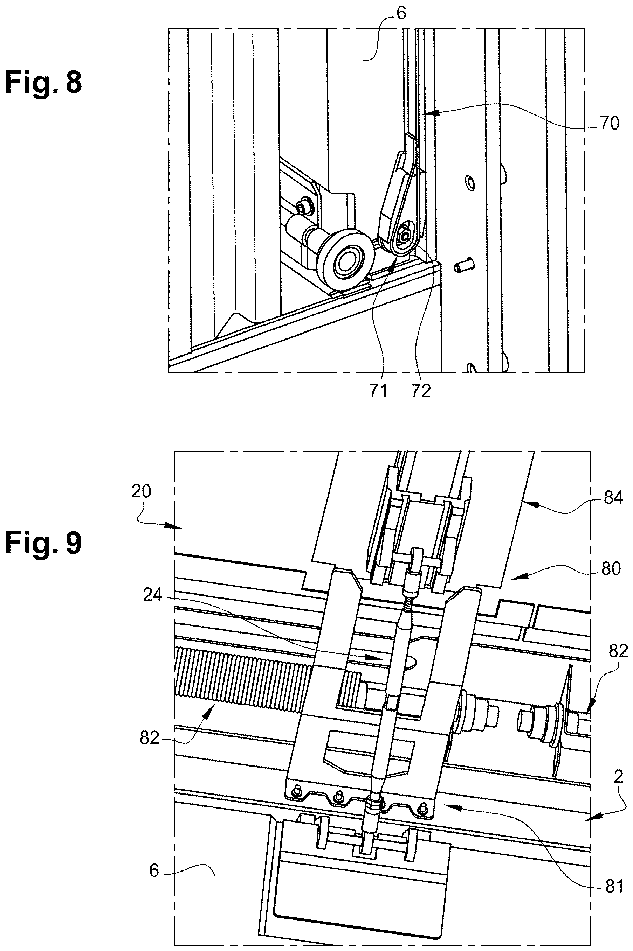

La figure 8 montre partiellement une courroie 70 comprenant sur l'une de ses extrémités un taquet 71 reliant, par l'intermédiaire d'un ergot 72 faisant saillie sur une face latérale du panneau 6 destiné à venir en contact du seuil 8 de carrosserie 1 lorsque le tablier 5 est déployé, le panneau 6 destiné à venir en contact du seuil 8 à la courroie 70.

Le taquet 71 est configuré pour bloquer la courroie 70 lorsque le tablier 5 est complétement en position déployée et donc pour verrouiller le rideau isotherme 3 en position fermée.

La figure 9 montre un actionneur 80, dans cet exemple de mode de réalisation, un vérin 24 pneumatique sans tige ovoïde.

Le vérin 24 est configuré pour relier le panneau 6 le plus éloigné du panneau 6 destiné à venir en contact avec le seuil 8 de carrosserie 1 à une base 84 d'actionneur 80 fixée au toit 20.

Le vérin 24 comprend une fourche 81 configurée pour relier la face arrière 2 de carrosserie 1 au toit 20.

Deux équilibreurs 82 représentés partiellement, sont reliés à chaque courroie 70 par une poulie 83 disposée sur chacune des faces latérales de la remorque 1 et au plus proche du toit 20 et du tablier 5, comme représenté partiellement à la figure 10.

Ces équilibreurs 83 sont configurés pour limiter la force exercée par le vérin 24.

Dans les paragraphes suivants, le fonctionnement de la présente invention est expliqué. Lorsqu' un utilisateur par exemple souhaite déplacer le tablier 5 de sa position déployée à sa position repliée et/ou inversement, celui-ci peut utiliser le boîtier 90 disposé sur une face extérieure latérale 11 de la carrosserie 1, il appuie donc sur la commande d'ouverture 92A pour déplacer le tablier 5 dans sa position repliée et la commande de fermeture 92B pour déplacer le tablier 5 dans sa position déployée. Préalablement, à l'aide d'une clé, il peut déverrouiller la commande de verrouillage 93, cette commande de verrouillage assurant une condamnation des commandes d'ouvertures et de fermetures 92A et 92B.

Lors de l'actionnement de l'ouverture du rideau isotherme 3, l'actionneur 80, ici le vérin 24 pneumatique, exerce une force de traction sur le panneau 6 le plus proche du toit 20 de la remorque 1. Les charnières latérales 23 vont coulisser dans les rails et entraîner également le panneau 6 adjacent au panneau 6 le plus proche du toit 20 de la carrosserie 1, de même que les charnières centrales 22, et ainsi de suite jusqu'à ce que le tablier 5 soit en position repliée, c'est-à-dire parallèle au toit 20.

Lors de l'actionnement de la fermeture du rideau isotherme 3, l'actionneur 80, ici le vérin 24 pneumatique, exerce une force de poussée sur le panneau 6 le plus proche du toit 20 de la carrosserie 1 jusqu'à ce que le panneau 6 destiné à entrer en contact avec le seuil 8 de carrosserie 1 soit en contact avec le seuil 8 et plus précisément jusqu'à ce que le pion 63 soit inséré dans la lumière 62 située sur le seuil 8.

Le taquet 71, situé sur l'extrémité de la courroie 70, permet de bloquer la courroie 70 lorsque le tablier 5 est complétement en position déployée et donc de verrouiller le rideau isotherme 3 en position fermée.

Le rideau isotherme 3 dispose d'un cadre 4, qui peut être en aluminium, et pourvu d'un joint d'étanchéité 9 tout le long de ce cadre 4 et d'un tablier 5 dont chacun des panneaux 6, au niveau de leur assemblage avec le panneau 6 adjacent à lui-même, comprennent un joint inter panneaux 7 sur sa face extérieure 40 comme sur sa face intérieure 42, assurant ainsi une étanchéité totale, la matière siliconée de ces joints inter panneaux 7 ayant des propriétés antiadhésives pour la glace.

La face du panneau 6 destinée à être en contact avec le seuil 8 de carrosserie 1, c'est-à-dire le dessous 60, comprend lui, un joint double chambre 61, également en matériau silicone, permettant ainsi la déformation de ce joint 61 lors du contact du tablier 5 avec le seuil 8 de carrosserie 1, évitant donc la déformation des panneaux 6.

Les joints inter panneaux 7 disposés sur la face extérieure 40 des panneaux 6 ont une forme en V, de même que les panneaux 6 permettant un écoulement de liquide vers le centre du tablier 5 et donc empêchant l'infiltration de liquide à l'intérieur de l'habitacle de la carrosserie 1.

De plus, la conformation en V de chaque panneau 6 limite, lorsque le tablier 5 est en position repliée et lorsque celui-ci était préalablement mouillée, l'introduction de liquide dans l'habitacle de la carrosserie 1 assurant une qualité hygiénique minimale de l'habitacle de la carrosserie 1.

## Revendications

1. Rideau isotherme (3) pour une carrosserie (1) frigorifique délimitant un espace intérieur, comprenant un cadre (4) dans lequel est guidé un tablier (5) qui présente une face interne (21) en regard de l'espace interne et une face externe opposée, ledit tablier (5) comprenant une pluralité de panneaux (6) adjacents comprenant sur leur face intérieure (42) une série d'embrèvements (52) dans lesquels sont encastrés des charnières (22, 23) assurant la liaison entre deux panneaux (6), ledit rideau isotherme étant **caractérisé en ce que** les panneaux (6) adjacents comprennent sur leur face extérieure (40) un système d'emboîture comprenant une nervure en V conçue pour venir s'engager dans une découpe de V du panneau (6) adjacent.

2. Rideau (3) selon la revendication 1 **caractérisé en ce que** la forme de V comprend une pointe de V dirigée vers un seuil (8) de carrosserie (1).

3. Rideau (3) selon l'une quelconque des revendications 1 ou 2, **caractérisé en ce que** les faces extérieure (40) et intérieure (42) du panneau (6) comprennent un logement configuré pour intégrer un moyen de fixation (41) de type rivet et configuré pour fixer un joint inter panneaux (7).

4. Rideau (3) selon la revendication 3, pris en combinaison avec la revendication 2, **caractérisé en ce que** le joint inter panneaux (7) disposé sur la face extérieure (40) du panneau (6) est en forme de V, la forme de V comprenant une pointe de V dirigée vers le seuil (8) de carrosserie (1).

5. Rideau (3) selon l'une quelconque des revendications précédentes, pris en combinaison avec la revendication 2, **caractérisé en ce qu'**une extrémité du tablier (5) configurée pour être en contact avec le seuil (8) de carrosserie (1) dans la position déployée du tablier (5), comprend un joint de type double tube (61) disposé le long d'un axe d'extension de ladite extrémité.

6. Rideau (3) selon la revendication 5, **caractérisé en ce que** l'extrémité du tablier (5) configurée pour être en contact avec le seuil (8) de carrosserie (1) dans la position déployée du tablier (5), comprend un pion (63) faisant saillie transversalement à un axe d'extension (Y) du panneau (6) configuré pour s'insérer dans le seuil (8) au niveau d'une lumière (62) disposée en regard du pion (63).

7. Rideau (3) selon l'une quelconque des revendications précédentes, **caractérisé en ce que** l'au moins une charnière (23) est configurée pour relier chaque panneau (6) à chacun des panneaux (6) adjacents à lui-même par des vis et à des rails par un galet (35) configurée pour s'insérer dans le rail correspondant.

8. Rideau (3) selon l'une quelconque des revendications précédentes, **caractérisé en ce que** le tablier (5) est configuré pour être mobile entre une position d'ouverture dans laquelle le tablier (5) est replié et une position de fermeture dans laquelle le tablier (5) est déployé de manière à fermer le rideau (3) par un actionneur (80), l'actionneur (80) étant un vérin (24) pneumatique sans tige ovoïde, le vérin (24) comprenant une fourche (81) configurée pour relier une face arrière (2) de carrosserie (1) au vérin (24).

9. Rideau (3) selon la revendication 8, pris en combinaison avec la revendication 5, **caractérisé en ce que** l'actionneur (80) comprend au moins un équilibreur (82), l'équilibreur (82) comprenant une poulie (83) configurée pour enrouler une courroie (70) configurée pour relier l'extrémité du tablier (5) configurée pour être en contact avec le seuil (8) de carrosserie (1) à l'équilibreur (82).

10. Carrosserie (1) frigorifique comprenant un rideau (3) selon l'une quelconque des revendications 1 à 9.

## Patentansprüche

1. Isotherm-Vorhang (3) für einen Kühlaufbau (1), der einen Innenraum begrenzt, einen Rahmen (4) umfassend, in dem eine Spritzwand (5) gleitet, die eine Innenseite (21) gegenüber dem Innenraum, und eine gegenüberliegende Außenseite aufweist, wobei die Spritzwand (5) eine Vielzahl von angrenzenden Platten (6) umfasst, die auf ihrer Innenseite (42) eine Reihe von Einkerbungen (52) umfassen, in denen Scharniere (22, 23) eingelassen sind, die für die Verbindung zwischen zwei Platten (6) sorgen, wobei der Isotherm-Vorhang **dadurch gekennzeichnet ist, dass** die angrenzenden Platten (6) auf ihrer Außenseite (40) ein Fugensystem umfasst, dass eine V-Rippe umfasst, die gestaltet ist, um in einen V-Ausschnitt der angrenzenden Platte (6) einzugreifen.

2. Vorhang (3) nach Anspruch 1, **dadurch gekennzeichnet, dass** die V-Form eine V-Spitze umfasst, die zu einer Schwelle (8) eines Aufbaus (1) gerichtet ist.

3. Vorhang (3) nach einem der Ansprüche 1 oder 2, **dadurch gekennzeichnet, dass** die Außen- (40) und Innenseite (42) der Platte (6) eine Aufnahme umfassen, die konfiguriert ist, um ein Befestigungsmittel (41) in der Art eines Niets zu integrieren, und konfiguriert, um eine Zwischenplattendichtung (7) zu fixieren.

4. Vorhang (3) nach Anspruch 3, in Verbindung mit Anspruch 2, **dadurch gekennzeichnet, dass** die Zwischenplattendichtung (7), die an der Außenseite (40) der Platte (6) angeordnet ist, in V-Form ist, wobei die V-Form eine V-Spitze umfasst, die zur Schwelle (8) eines Aufbaus (1) gerichtet ist.

5. Vorhang (3) nach einem der vorstehenden Ansprüche, in Verbindung mit Anspruch 2, **dadurch gekennzeichnet, dass** ein Ende der Spritzwand (5), das konfiguriert ist, um in der ausgefahrenen Position der Spritzwand (5) in Kontakt mit der Schwelle (8) eines Aufbaus (1) zu sein, eine Dichtung in der Art eines Doppelschlauches (61) umfasst, die entlang einer Erstreckungsachse des Endes angeordnet ist.

6. Vorhang (3) nach Anspruch 5, **dadurch gekennzeichnet, dass** das Ende der Spritzwand (5), das konfiguriert ist, um in der ausgefahrenen Position der Spritzwand (5) in Kontakt mit der Schwelle (8) eines Aufbaus (1) zu sein, einen Zapfen (63) umfasst, der quer zu einer Erstreckungsachse (Y) der Platte (6) hervorsteht, konfiguriert, um im Bereich eines Langloches (62), das gegenüber dem Zapfen (63) angeordnet ist, in die Schwelle (8) eingeführt zu werden.

7. Vorhang (3) nach einem der vorstehenden Ansprüche, **dadurch gekennzeichnet, dass** mindestens ein Scharnier (23) konfiguriert ist, um jede Platte (6) mit jeder der an sich selbst angrenzenden Platten (6) anhand von Schrauben, und durch eine Kugelrolle (35) mit Schienen zu verbinden, konfiguriert, um in die entsprechende Schiene eingeführt zu werden.

8. Vorhang (3) nach einem der vorstehenden Ansprüche, **dadurch gekennzeichnet, dass** die Spritzwand (5) konfiguriert ist, um zwischen einer Öffnungsposition, in der die Spritzwand (5) eingezogen ist, und einer Schließposition, in der die Spritzwand (5) ausgefahren ist, beweglich zu sein, um den Vorhang (3) durch ein Stellglied (80) zu schließen, wobei das Stellglied (80) ein Druckluftzylinder (24) ohne eiförmige Stange ist, wobei der Zylinder (24) eine Gabel (81) umfasst, die konfiguriert ist, um eine Rückseite (2) eines Aufbaus (1) mit dem Zylinder (24) zu verbinden.

9. Vorhang (3) nach Anspruch 8, in Verbindung mit Anspruch 5, **dadurch gekennzeichnet, dass** das Stellglied (80) mindestens einen Ausgleicher (82) umfasst, wobei der Ausgleicher (82) eine Riemenscheibe (83) umfasst, die konfiguriert ist, um einen Riemen (70) aufzurollen, der konfiguriert ist, um das Ende der Spritzwand (5), die konfiguriert ist, um in Kontakt mit der Schwelle (8) eines Aufbaus (1) zu sein, mit dem Ausgleicher (82) zu verbinden.

10. Kühlaufbau (1), einen Vorhang (3) nach einem der Ansprüche 1 bis 9 umfassend.

## Claims

1. An insulated curtain (3) for a refrigerated body (1) delimiting an internal space, comprising a frame (4) in which is guided a shutter (5) which has an inner face (21) facing the inner space and an opposite outer face, said shutter (5) comprising a plurality of adjacent panels (6) comprising on their internal face (42) a series of recesses (52) in which are embedded hinges (22, 23) ensuring the connection between two panels (6), said insulated curtain being **characterized in that** the adjacent panels (6) comprise on their external face (40) a socket system comprising a V-shaped rib designed to be engaged in a V-shaped cutout of the adjacent panel (6).

2. The curtain (3) according to claim 1 **characterized in that** the V-shape comprises a V point directed towards a threshold (8) of the body (1).

3. The curtain (3) according to any one of claims 1 or 2, **characterized in that** the external (40) and internal (42) faces of the panel (6) comprise a housing configured to integrate a fixing means (41) of the rivet type and configured to fix an inter-panel seal (7).

4. The curtain (3) according to claim 3, considered in combination with claim 2, **characterized in that** the inter-panel seal (7) disposed on the external face (40) of the panel (6) is V-shaped, the V-shape comprising a V point directed towards the threshold (8) of the body (1).

5. The curtain (3) according to any one of the preceding claims, considered in combination with claim 2, **characterized in that** one end of the shutter (5) configured to be in contact with the threshold (8) of the body (1) in the deployed position of the shutter (5), comprises a joint of the double tube type (61) disposed along an axis of extension of said end.

6. The curtain (3) according to claim 5, **characterized in that** the end of the shutter (5) configured to be in contact with the threshold (8) of the body (1) in the deployed position of the shutter (5), comprises a pin (63) projecting transversely to an axis of extension (Y) of the panel (6) configured to be inserted into the threshold (8) at the level of a slot (62) arranged opposite the pin (63).

7. The curtain (3) according to any one of the preceding claims, **characterized in that** at least one hinge (23) is configured to connect each panel (6) to each of the adjacent panels (6) to itself by screws and to the rails by a roller (35) configured to be inserted into the corresponding rail.

8. The curtain (3) according to any one of the preceding claims, **characterized in that** the shutter (5) is configured to be movable between an open position in which the shutter (5) is folded up and a closed position in which the shutter (5) is deployed so as to close the curtain (3) by an actuator (80), the actuator (80) being a pneumatic cylinder (24) without an ovoid rod, the cylinder (24) comprising a fork ( 81) configured to connect a rear face (2) of the body (1) to the cylinder (24).

9. The curtain (3) according to claim 8, considered in combination with claim 5, **characterized in that** the actuator (80) comprises at least one equalizing device (82), the equalizing device (82) comprising a pulley (83) configured to wind a belt (70) configured to connect the end of the shutter (5) configured to contact the threshold (8) of the body (1) to the balancer (82).

10. A refrigerated body (1) comprising a curtain (3) according to any one of claims 1 to 9.
